# EUROPEAN PATENT SPECIFICATION

(11) **EP 3 468 767 B1**
(45) Date of publication and mention of the grant of the patent: **05.08.2020**
(21) Application number: 17728664.8
(22) Date of filing: 01.06.2017
(51) Int. Cl.: B29C 48/30, B29C 48/03, B28B 3/26

(54) **EXTRUDER DEVICE FOR MANUFACTURING MOULDED COMPONENTS**
EXTRUDERVORRICHTUNG ZUR HERSTELLUNG VON FORMTEILEN
DISPOSITIF D'EXTRUSION POUR LA FABRICATION D'ÉLÉMENTS MOULÉS

(30) Priority: 08.06.2016 ES 201630774
(43) Date of publication of application: 17.04.2019
(73) Proprietor: BSH Hausgeräte GmbH, 81739 München (DE)
(72) Inventor: ALAMAN AGUILAR, Jorge, 50008 Zaragoza (ES); ANADÓN BAYO, Andrés, 50059 Zaragoza (ES); BUNUEL MAGDALENA, Miguel Angel, 50017 Zaragoza (ES); DIAZ BENITO, Belen, 83329 Waging am See (DE); GIMENO ASIN, Carlos, 50015 Zaragoza (ES); MORENO TERRÉ, Alejandro, 50010 Zaragoza (ES); PLANAS LAYUNTA, Fernando, 50009 Zaragoza (ES); SOLER COSTA, Juan Ramón, 50003 Zaragoza (ES)
(86) International application number: PCT/IB2017/053224
(87) International publication number: WO 2017/212372

(56) References cited:
- EP-A1- 0 945 245
- WO-A1-93/06985
- WO-A1-2013/131612
- FR-A1- 2 310 201
- GB-A- 820 716
- GB-A- 1 234 831
- US-A1- 2009 050 783

## Description

The invention relates to an extruder device for manufacturing moulded components, which comprises a conveyor container and a feeding device for feeding a material to be extruded into the conveyor container. The extruder device moreover comprises a shaping extruder port as output of the conveyor container.

Extruder devices are conveyor devices, which according to the functional principle of the screw conveyor eject solid to viscous masses under high pressure and at high temperature steadily from a shaping opening. This method is referred to as extrusion.

From the DE 2 004 888 B1 a device for manufacturing plastic foils is known. The device represents an extruder. Roller elements can be adjusted at the output of the extruder.

EP 0 945 245 A1 discloses an extrusion blow molding head for molding hollow products with noncircular cross-section. From GB 1 234 831 A an inset tip for use in an expandable die comprising a rod of circular section having each end bounded by at least one concavity in the form of a semi-cylinder of the same radius as the cross-section of the tip is known. WO 2013/131612 A1 discloses a annular die on an extrusion head for producing tubular or sheet-like preforms with an arcuate die gap and with a melt channel delimited by a mandrel and a die body, the cross-sectional profile of the melt channel being variable by way of adjusting elements. From the GB 820716 A and the US 20090050783 A1 adjustable extrusion dies are known. The FR 2 310 201 A finnaly discloses a hannel section tile extruding machine with clay passed through extrusion slot and between two synchronised moving plates. WO 93/06985 A1 discloses further variants of adjustable dies for movable extruder devices.

The manufacture of extrusion components is comprehensively known. In this connection moulded components can be extruded, which are formed of the most varied materials, for instance plastic, metal, or glass. However, commonly they are limited in their complexity with regard to their shape design to the respective limited embodiments of an extruder device.

In the very case of very complex moulded components, which can be of the most varied design in their three-dimensional geometry, as to their manufacture as extrusion component are extremely dependent on material and in this connection manufacturable with limitations.

Thus, in this connection particularly for a ceramic material by common extruder devices it is only to a very limited extent possible to manufacture components, wherein this then is facilitated only for very simple straight geometries. This relates in particular also to so-called uniaxial components so that manufacture is restricted thereto.

Thus, in the case of the common ways of proceeding it is also required to keep available a plurality of most varied extruder devices, in order to be able to create different geometries, even if they are simple.

It is the task of the present invention to provide an extruder device, in which the number of variants of shapes to be produced is raised.

This task is solved by an extruder device according to the features of claim 1.

An extruder device according to the invention is configured for manufacturing moulded components. The extruder device comprises a conveyor container as well as a feeding device for feeding a material to be extruded into the conveyor container. The extruder device moreover comprises a shaping extruder port as output of the conveyor container. By this extruder port thus also a component is provided, through which then the desired shape of the moulded component to be manufactured is predetermined. An essential idea of the invention is to be seen in that the extruder port has a ring that is deformable in itself and is configured of a multitude of links. For such an embodiment of the extruder port same can be deformed in the most varied ways so that at the output of the conveyor container the most different and very varied output geometries can be adjusted, whereby the manufacture of the most different and also very complex shapes of a moulded component to be manufactured can be adjusted. Thus, by the extruder device according to the invention the options for shape variants to be manufactured are considerably raised, without the extruder device having to be converted or even multiple separate extruder devices having to be made available. The flexibility of employing the extruder device thus is essentially increased.

Preferably it is envisaged that the links for forming the ring are adjacent to each other. By such a design then also in the running direction of the ring same is fully closed and by the adjacent positioning a radial leaking of material to be extruded through the links of the ring can be prevented as best as possible. By the adjacent positioning of the links thus quasi also a nearly continuous transition is achieved so that then the outer surface of the moulded component to be manufactured can be designed as evenly and continuously as possible.

According to the invention the links are configured as continuous and circumferentially closed link chain. Thereby the above-named advantages are improved once again.
Preferably it is envisaged that the links are movable outwardly or inwardly in the radial direction relative to a ring axis. These multiple movement options then provide the most varied position adjustment options both in each case for one link viewed as such, wherein then, if this preferably applies to all links, the most different and complex geometries in the circumferential direction around the ring, which thus are predetermined by the ring shape, can be adjusted.

In an advantageous embodiment it may also be envisaged that the ring is deformable to create free shapes. Thereby the possibility of the variants, in which a moulded component is capable of being manufactured, is once again clearly raised.

Preferably, it is envisaged that the extruder device has an adjustment device, which is configured to act upon the links for changing and keeping the position of a link in the ring. By such an adjustment device the very exact change in position of one or several links can be facilitated and also the adjustment of position of multiple links relative to each other can be effected very precisely. Moreover, also after the adjustment this position is kept permanently very secure so that then no undesired deformation of the ring occurs then when material to be extruded passes through the ring and the shape design of the moulded component then to be manufactured by the individual shape adjustment of the ring can then be very exactly generated.

In particular it is envisaged that the adjustment device is a hydraulic device with hydraulic pistons, wherein the hydraulic pistons act upon the links for changing the position in the ring and for keeping the position of a link position. A hydraulic device as such is an extremely robust construction, which can apply the corresponding forces, in order to hold the links in their position. This is also then the case, if the material to be extruded is pressed at great pressure through the ring.

Preferably it is envisaged that the adjustment device is configured for changing the position of the links during a shaping of a moulded component to be manufactured from the extruder port. By such a design during the manufacturing process of a moulded component the position of one or several links can be individually changed. Thereby also in the longitudinal direction of a moulded component to be manufactured even during its manufacturing process a change in the shape of the ring can be effected so that here, too, then the complexity of the moulded component to be manufactured can be clearly raised. It thus is not required that a shape of the ring once manufactured remains unchanged for the entire manufacture of a moulded component, but rather through this adjustment possibility when manufacturing a moulded component thus at different places of a moulded component different geometries, in particular cross-sectional components can be manufactured. The complexity of moulded components to be manufactured thereby is once again clearly increased.

In particular it is envisaged that a non-stick device for avoiding a sticking of the material to be extruded to the extruder port is configured. The non-stick device is in particular an ultrasound emitting non-stick device. An undesired sticking of the material to be extruded to the inner surface of the ring is avoided thereby. Undesired material ablation of the moulded component to be manufactured and thus an undesired change of the outer contour of this moulded component to be manufactured is thereby prevented.

Preferably it is envisaged that the extruder device comprises a pressure measuring device, by which the pressure of the material to be extruded is capturable at the extruder port. In particular the extruder device also comprises a control unit, by which a change of the pressure is adjustable in dependency on a change in the shape of the ring. Thereby individual situations can be very specifically responded to so that no undesired pressures at this output and thus also at this ring occur. On the other hand, the pressures then in each case also required can be adjusted to a desired extent so that also a sufficiently strong expelling of the material is given.

The pressure capturing in this connection, as it has already been named in the above, is an essential point in order to respectively adjust the pressure conditions at the extruder port to the then respective individually adjusted shape design of the ring. In particular in this connection it is envisaged that dependent on a change of shape of the ring the geometry resulting therefrom is determined and dependent thereon then the adjustment of the pressure is determined and a corresponding adjustment effected.

In an advantageous way the extruder device is configured for manufacture of moulded components at least partially comprising ceramic. In particular thus the material to be extruded is partially ceramic. For this very material the complex geometry manufacture of moulded components so far is not sufficiently possible. In particular therein, however, the manufactured component is very cost-intensive so that also with the extruder device according to the invention particularly in the manufacture of moulded components made of ceramic also their production costs are reduced.

In an advantageous way a moulded component is a household appliance component, which is capable of being installed on a household appliance. A household appliance is in particular configured for laundry care or for cleaning dishes or for preparing food or for storing and preserving food items.

In particular it is envisaged that in the case of a change in position of two adjacent links with a sharp offset of these links relative to each other, in particular a radial offset outwardly of two links equally orientated in the direction of the hole axis of the ring, an interface between the two adjacent links is covered by a cover, wherein this cover is in particular an elastic material. Thereby, equally occurring undesired large gaps between the two links can be closed and an undesired radial leakage of material to be extruded between these links is prevented.

The extruder device also has a heating device, by means of which the material to be extruded is heated prior to reaching the extruder port. Moreover, the extruder device can also comprise a temperature capturing device, wherein in particular also the temperature is captured at the extruder port, in order to be able to adjust the respective process conditions in dependency thereon.

By the invention therefore it is facilitated that by a single extruder device and without a major conversion of the extruder device a plurality of different geometries for a moulded component are realizable, in particular also the most varied complex geometries are capable of being generated. For this purpose only this one extruder device is required.

Embodiments of the invention in the following are explained in more detail by reference to schematic drawings. These show in:
- Fig. 1: a schematic view of an embodiment of an extruder device;
- Fig. 2: a schematic perspective view of an embodiment of an extruder port of the extruder device according to Fig. 1 in a first shape design of the extruder port;
- Fig. 3: a view according to Fig. 2 with a shape design of the extruder port that is different from Fig. 2; and
- Fig. 4: a view according to Fig. 2 and Fig. 3 with a once again different shape design of the extruder port.

In the figures same elements and elements having the same functions are equipped with the same reference signs.

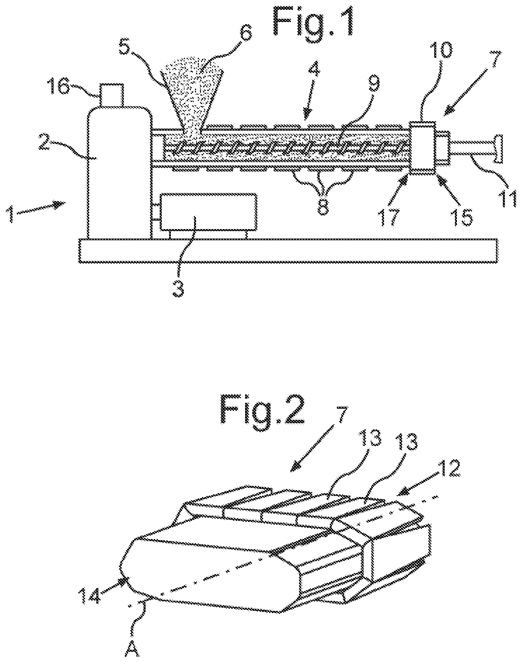

In Fig. 1 a schematic lateral view of an extruder device 1 is shown, which is configured for manufacturing the most varied moulded components. The extruder device 1 comprises in particular a gear 2 and a motor 3. Moreover, the extruder device 1 comprises a conveyor container 4 as well as a feeding device 5, which is configured for feeding a material 6 to be extruded in the conveyor container 4. Moreover, the extruder device 1 comprises a shaping extruder port 7, which represents an output of the conveyor container 4, from which the moulded component is output.

Moreover it is envisaged that several heating zones 8 are configured at the conveyor container 4, by which the heating of the material 6 in the conveyor container 4 is facilitated. By a conveyor unit, in particular a screw conveyor 9, the material 6 is directed into the direction of the shaping extruder port 7. Also same has preferably heating zones 10.

The extruder device 1 moreover then also comprises a receptacle 11, upon which the moulded component ejected from the extruder port 7 comes to rest.

In Fig. 2 in a schematic view an embodiment of the component of the extruder port 7 is shown. In this perspective view it can be seen that the extruder port 7 comprises a ring 12 that is deformable in itself and that is configured of a multitude of links 13. For the sake of clarity here only several of the plate-type links 13 are equipped with the corresponding reference sign.

The links 13 are adjacent to each other for forming the ring 12. It is moreover envisaged that the ring 12 composed of the links 13 is fully circumferentially closed and the links 13 quasi configured as continuous link chain.

In the view shown in Fig. 2 a simple shape design of the ring 12 is set so that in a sketch-like representation a moulded component 14 has a relatively simple geometry. The moulded component 14 is at least partially made from ceramic and thus represents a ceramic moulded component. In particular the moulded component 14 is a domestic appliance component for a household appliance.

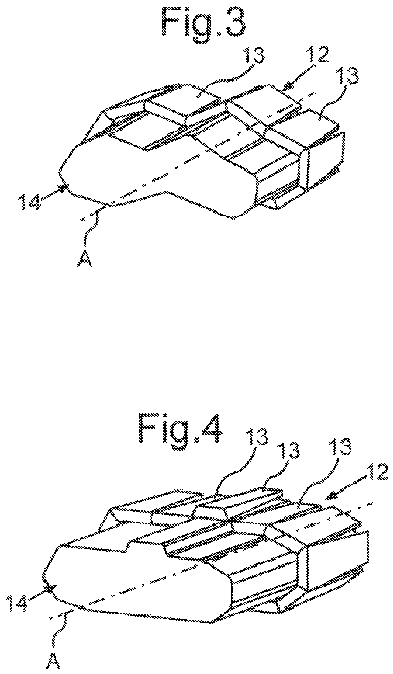

In Fig. 3 in a view corresponding to Fig. 2 an alternative shape setting of the ring 12 is shown, wherein here a corresponding more complex cross-sectional geometry occurs so that also a geometry of the moulded component 14 has a clear complexity in comparison with Fig. 2. In this embodiment it is envisaged that links 13 are individually adjusted in their position in comparison with Fig. 2.

For this purpose the extruder device 1 comprises an adjustment device, which is not shown but in an exemplary way indicated with a reference sign 15 in Fig. 1 and which is configured to act upon the links 13 for changing the position in the ring 12 and for keeping the position of a link.

Moreover it is envisaged that this adjustment device 15 in particular is a hydraulic device with several hydraulic pistons, wherein in each case at least one hydraulic piston acts upon one of the links 13 for changing the position in the ring 12 and for keeping the position of a link 13.

It is also envisaged that the adjustment device 15 is configured in such a way that it is adapted for the change in position of links 13 during the shaping of the moulded component 14 from the extruder port 7. This also means that the position of at least one link 13 can be tilted and/or a tilted position of a link 13 relative to the ring axis A, as it is for instance drawn in Fig. 2, can be changed. By these degrees of freedom of the positioning of a link 13 the variant formation of complex cross-sectional shapes for a moulded component 14, as it is then predetermined by the ring 12, is clearly raised. By a corresponding change in the position of a link 13, in particular all links 13, being facilitated also during a manufacturing process, thus also a moulded component 14 thus can be manufactured, which with regard to its longitudinal axis can be manufactured on different portions of the longitudinal axis with different cross-sectional geometries.

In Fig. 4 a further exemplary view corresponding to Fig. 2 and Fig. 3 is shown, wherein here in an exemplary way it is shown that a link 13 in comparison with its further adjacent adjoining links 13 is strongly radially outwardly offset and an even adjoining, as it is for instance the case in Fig. 2 and Fig. 3, is not given here. By such a step-like offset of adjacent links a gap between two adjacent links can occur, which can be covered by a cover element, which is not shown and preferably is elastic. Thereby a leakage of the material of the moulded component 14 to be manufactured via such gap can be avoided. As can be seen in the embodiment according to Fig. 4, locally very specific and also filigree partial portions of the moulded component 14 can be simply generated.

The extruder device 1 has a control unit 16, by which the manufacturing process is controlled.

Moreover the extruder device 1 comprises a pressure measuring device 17, by which the pressure of the material 6 to be extruded is capable of being captured at the extruder port 7.

### LIST OF REFERENCES

- 1: extruder device
- 2: gear
- 3: motor
- 4: conveyor container
- 5: feeding device
- 6: material
- 7: extruder port
- 8: heating zone
- 9: screw conveyor
- 10: heating zone
- 11: receptacle
- 12: ring
- 13: link
- 14: moulded component
- 15: adjustment device
- 16: control unit
- 17: pressure measuring device

## Claims

1. Extruder device (1) for manufacturing moulded components (14), comprising a conveyor container (4) and a feeding device (5) for feeding a material (6) to be extruded into the conveyor container (4), and comprising a shaping extruder port (7) as output of the conveyor container (4), whereby the extruder port (7) comprises a ring (12), which is deformable in itself and which is formed of a multitude of links (13), which are movable relative to each other **characterized in that** the links (13) are configured as continuous and circumferentially closed link chain.

2. Extruder device (1) according to claim 1, **characterized in that** the links (13) for forming the ring (12) are adjacent to each other.

3. Extruder device (1) according to any one of the preceding claims, **characterized in that** links (13) are outwardly or inwardly movable in radial direction relative to the ring axis (A) and/or are tiltable relative to the ring axis (A).

4. Extruder device (1) according to any one of the preceding claims, **characterized in that** the ring (13) is deformable whilst creating free shapes.

5. Extruder device (1) according to any one of the preceding claims, **characterized in that** the extruder device (1) comprises an adjustment device (15), which is configured for acting upon the links (13) for changing the position in the ring (12) and for keeping the position of a link position.

6. Extruder device (1) according to claim 5 **characterized in that** the adjustment device (15) is a hydraulic device with hydraulic pistons, wherein the hydraulic pistons act upon the links (13) for changing the position in the ring (12) and for keeping the position of a link position.

7. Extruder device (1) according to claim 5 or 6 **characterized in that** the adjustment device (15) is configured for changing the position of links (13) during the shaping of the moulded component (14) to be manufactured from the extruder port (7).

8. Extruder device (1) according to any one of the preceding claims, **characterized in that** the extruder device (1) comprises a pressure measuring device (17), by which the pressure of the material (6) to be extruded is capturable at the extruder port (7), wherein the extruder device (1) comprises a control unit (16), by which a change of the pressure is adjustable in dependency on a change in the shape of the ring (12).

## Patentansprüche

1. Extrudervorrichtung (1) zum Herstellen von Formteilen (14), die einen Förderbehälter (4) und eine Beschickungsvorrichtung (5) zum Beschicken des Förderbehälters (4) mit einem zu extrudierenden Material (6) und als Ausgang des Förderbehälters (4) eine formgebende Extruderöffnung (7) umfasst, wobei die Extruderöffnung (7) einen Ring (12) umfasst, der sich verformen lässt und aus mehreren Gliedern (13) gebildet ist, die in Bezug aufeinander beweglich sind, **dadurch gekennzeichnet, dass** die Glieder (13) als durchgängige und in Umfangsrichtung geschlossene Gliederkette konfiguriert sind.

2. Extrudervorrichtung (1) nach Anspruch 1, **dadurch gekennzeichnet, dass** die Glieder (13) zum Bilden des Rings (12) nebeneinander liegen.

3. Extrudervorrichtung (1) nach einem der vorhergehenden Ansprüche, **dadurch gekennzeichnet, dass** sich Glieder (13) in radialer Richtung in Bezug auf die Ringachse (A) nach außen oder innen bewegen und/oder in Bezug auf die Ringachse (A) kippen lassen.

4. Extrudervorrichtung (1) nach einem der vorhergehenden Ansprüche, **dadurch gekennzeichnet, dass** der Ring (13) verformbar ist und dabei freie Profile bildet.

5. Extrudervorrichtung (1) nach einem der vorhergehenden Ansprüche, **dadurch gekennzeichnet, dass** die Extrudervorrichtung (1) eine Einstellvorrichtung (15) umfasst, die so konfiguriert ist, dass sie zum Ändern der Position im Ring (12) und zum Beibehalten der Position einer Gliederposition auf die Glieder (13) einwirkt.

6. Extrudervorrichtung (1) nach Anspruch 5, **dadurch gekennzeichnet, dass** es sich bei der Einstellvorrichtung (15) um eine Hydraulikvorrichtung mit Hydraulikkolben handelt, die zum Ändern der Position im Ring (12) und zum Beibehalten der Position einer Gliederposition auf die Glieder (13) einwirken.

7. Extrudervorrichtung (1) nach Anspruch 5 oder 6, **dadurch gekennzeichnet, dass** die Einstellvorrichtung (15) so konfiguriert ist, dass sie beim Formen des mit der Extruderöffnung (7) herzustellenden Formteils (14) die Position von Gliedern (13) ändert.

8. Extrudervorrichtung (1) nach einem der vorhergehenden Ansprüche, **dadurch gekennzeichnet, dass** die Extrudervorrichtung (1) eine Druckmessvorrichtung (17) umfasst, mit der sich der Druck des zu extrudierenden Materials (6) an der Extruderöffnung (7) erfassen lässt, wobei die Extrudervorrichtung (1) eine Steuereinheit (16) umfasst, mit der sich in Abhängigkeit von einer Änderung des Profils des Rings (12) eine Änderung des Drucks einstellen lässt.

## Revendications

1. Dispositif d'extrusion (1) permettant de fabriquer des composants moulés (14), comprenant un conteneur convoyeur (4) et un dispositif d'alimentation (5) permettant d'alimenter un matériau (6) à extruder dans le conteneur convoyeur (4), et comprenant un orifice d'extrudeuse de façonnage (7) comme sortie du conteneur convoyeur (4), dans lequel l'orifice d'extrudeuse (7) comprend une bague (12), qui est déformable en soi et qui est formée d'une multitude de liens (13), qui sont mobiles les uns par rapport aux autres **caractérisé en ce que** les liens (13) sont configurés comme une chaîne de liens continus et fermés sur la circonférence.

2. Dispositif d'extrusion (1) selon la revendication 1, **caractérisé en ce que** les liens (13) permettant de former la bague (12) sont adjacents les uns aux autres.

3. Dispositif d'extrusion (1) selon l'une quelconque des revendications précédentes, **caractérisé en ce que** des liens (13) sont mobiles vers l'extérieur ou vers l'intérieur dans une direction radiale relativement à l'axe de bague (A) et/ou inclinables relativement à l'axe de bague (A).

4. Dispositif d'extrusion (1) selon l'une quelconque des revendications précédentes, **caractérisé en ce que** la bague (13) est déformable tout en créant des formes libres.

5. Dispositif d'extrusion (1) selon l'une quelconque des revendications précédentes, **caractérisé en ce que** le dispositif d'extrusion (1) comprend un dispositif d'ajustement (15), qui est configuré afin d'agir sur les liens (13) afin de changer la position dans la bague (12) et afin de maintenir la position d'une position de lien.

6. Dispositif d'extrusion (1) selon la revendication 5, **caractérisé en ce que** le dispositif d'ajustement (15) est un dispositif hydraulique avec des pistons hydrauliques, dans lequel les pistons hydrauliques agissent sur les liens (13) afin de modifier la position dans la bague (12) et afin de maintenir la position d'une position de lien.

7. Dispositif d'extrusion (1) selon la revendication 5 ou 6, **caractérisé en ce que** le dispositif d'ajustement (15) est configuré afin de changer la position des liens (13) pendant le façonnage du composant moulé (14) à fabriquer à partir de l'orifice d'extrudeuse (7).

8. Dispositif d'extrusion (1) selon l'une quelconque des revendications précédentes, **caractérisé en ce que** le dispositif d'extrusion (1) comprend un dispositif de mesure de pression (17), par lequel la pression du matériau (6) à extruder peut être capturée au niveau de l'orifice d'extrudeuse (7), dans lequel le dispositif d'extrusion (1) comprend une unité de commande (16), par laquelle un changement de la pression est réglable en fonction d'un changement de la forme de la bague (12).
